# FASCICULE DE BREVET EUROPEEN

(11) **EP 3 421 122 B1**
(45) Date de publication et mention de la délivrance du brevet: **31.07.2024**
(21) Numéro de dépôt: 18179757.2
(22) Date de dépôt: 26.06.2018
(51) Int. Cl.: B01J 19/24

(54) **MODULE DE REACTEUR-ECHANGEUR A AU MOINS DEUX CIRCUITS DE FLUIDE REALISE PAR EMPILEMENT DE PLAQUES, APPLICATIONS AUX REACTIONS CATALYTIQUES EXOTHERMIQUES OU ENDOTHERMIQUES**
REAKTOR-WÄRMETAUSCHERMODUL MIT MINDESTENS ZWEI FLUIDKREISLÄUFEN, DAS DURCH PLATTENSTAPELUNG ENTSTEHT, ANWENDUNGEN BEI EXOTHERMEN ODER ENDOTHERMEN KATALYTISCHEN REAKTIONEN
REACTOR-EXCHANGER MODULE WITH AT LEAST TWO FLUID CIRCUITS PRODUCED BY STACKING OF PLATES, APPLICATIONS TO EXOTHERMIC OR ENDOTHERMIC CATALYTIC REACTIONS

(30) Priorité: 28.06.2017 FR 1755951
(43) Date de publication de la demande: 02.01.2019
(73) Titulaire: Commissariat à l'Energie Atomique et aux Energies Alternatives, 75015 Paris (FR)
(72) Inventeur: BENGAOUER, Alain, 38920 CROLLES (FR); BAURENS, Pierre, 38940 ROYBON (FR); DUCAMP, Julien, 08000 CHARLEVILLE-MEZIERES (FR)
(74) Mandataire: Cabinet Nony

(56) Documents cités:
- WO-A1-2006/079848
- WO-A1-2007/003959
- WO-A1-2007/012890
- WO-A1-2014/096779

## Description

### Domaine technique

La présente invention concerne les réacteurs-échangeurs de chaleur à au moins deux circuits de fluide comportant chacun des canaux, réalisés par empilement de plaques.

Ces réacteurs chimiques usuellement appelés aussi échangeurs-réacteurs mettent en oeuvre un procédé en continu selon lequel on injecte simultanément une quantité faible de co-réactants, à l'entrée d'un premier circuit de fluide, appelé usuellement circuit de réactifs, de préférence équipé d'un mélangeur, et on récupère le produit chimique obtenu en sortie dudit premier circuit. Le deuxième circuit de fluide, appelé usuellement utilité ou circuit de caloporteur, a pour fonction de contrôler thermiquement la réaction chimique, soit en apportant la chaleur nécessaire à la réaction, soit au contraire en évacuant la chaleur dégagée par celle-ci.

La présente invention vise à améliorer le contrôle thermique des réactions.

L'application principale visée est la réalisation de réacteurs catalytiques, et en particulier des réacteurs catalytiques utilisant des catalyseurs solides et dédiés à des réactions fortement exothermiques ou endothermiques.

Plus précisément, un réacteur-échangeur selon l'invention est particulièrement adaptée à la mise en oeuvre de procédés de synthèse de carburants et combustibles, tels que le gaz naturel de substitution (acronyme anglais SNG pour « substitute naturel gas »), le diméthyléther (DME), le méthanol (MeOH),... à partir d'hydrogène et d'oxydes de carbones ou à partir de gaz de synthèse (mélange d'hydrogène et d'oxydes de carbones) ou encore de réactions de reformage, par exemple du méthane.

Dans ces procédés, les réactions sont très exothermiques ou très endothermiques. Par exemple dans le cas de production de méthane à partir de gaz de synthèse, les principales réactions enjeu sont :

CO+3H₂ →CH₄ +H₂O

CO₂+4H₂→ CH₄ +2H₂O

CO+H₂O→ CO₂ +H₂

Ainsi, les réactions chimiques particulièrement visées par l'invention sont les réactions de méthanation de CO et/ou de CO₂, les réactions de synthèse du méthanol et du

DME, les réactions de reformage humide ou à sec du méthane ou d'autres hydrocarbures, les réactions d'oxydation, ou encore de synthèse Fischer-Tropsch.

Bien que décrite plus spécifiquement en référence à l'application principale de réactions catalytiques hétérogènes, l'invention peut aussi s'appliquer à des réactions de catalyse homogène dans laquelle les réactifs se trouvent dans la même phase que le catalyseur.

De manière générale, l'invention peut s'appliquer à toutes réactions catalytiques.

### Etat de la technique

Plusieurs types de réacteurs catalytiques hétérogènes ont déjà fait l'objet de nombreuses réalisations industrielles.

Cependant, le caractère hétérogène (polyphasique) de la réaction à produire, i.e. une ou plusieurs phases réactives et une phase catalytique, rend le dimensionnement des réacteurs difficile, lorsqu'il s'agit de garantir un taux de conversion maximal, une bonne sélectivité de la réaction et un bon contrôle de la température de façon à limiter la désactivation des catalyseurs.

Dans le cas de réactions catalytiques fortement exothermiques, le problème du contrôle thermique est crucial car l'évolution de la température dans le réacteur conditionne le taux de conversion et la sélectivité de la réaction ainsi que la cinétique de désactivation du catalyseur. En effet, les cinétiques de réaction sont plus fortes à haute température selon la loi d'Arrhenius, mais les réactions étant équilibrées et exothermiques, l'équilibre thermodynamique est plus favorable à basse température.

On peut classer en plusieurs catégories les principaux types de réacteurs connus pour les réactions exothermiques.

On peut citer tout d'abord les réacteurs à lit fixe dans lesquels le catalyseur solide est intégré sous forme de grains ou pastilles. Ces réacteurs à lit fixe peuvent être adiabatiques et agencés en cascade. L'exo thermicité de la réaction est alors généralement gérée par une dilution des réactifs en entrée du premier étage de réaction, par exemple par recirculation des produits et par la mise en place d'échangeurs de chaleur destinés à refroidir le mélange réactifs-produits entre les différents réacteurs. Cette architecture de réacteurs en cascade présente l'avantage de la simplicité de fabrication mais rend difficile le contrôle thermique pour des réactions exothermiques et nécessite l'utilisation de catalyseurs stables à haute température.

On peut citer également les réacteurs de type à lit fluidisé ou entraîné dans lesquels le catalyseur à fluidifier est sous forme de poudre dont l'attrition doit être maitrisée. La fluidisation du catalyseur permet une bonne homogénéisation thermique du mélange de réactifs dans le réacteur, ce qui évite les points chauds et donc un meilleur contrôle thermique. L'inconvénient est que le volume de réacteur dédié est plus important que dans le cas des réacteurs à lits fixes à écoulement piston De plus, la fluidisation des particules impose de limiter les plages de variation de débit de gaz, ce qui rend ces réacteurs peu flexibles vis-à-vis de ces variations de débit.

Dans les réacteurs-échangeurs, il existe de nombreuses configurations en fonction de la disposition relative du circuit de réactif et du circuit de refroidissement. Il peut s'agir de réacteurs-échangeurs de type tube-calandre, la réaction se produisant dans les tubes réactionnels refroidis en périphérie par un bain caloporteur, comme par exemple décrit dans la demande de brevet WO2012/35173, de réacteurs-échangeurs à écoulement radial ou de réacteurs-échangeurs à plaques, comme par exemple décrit dans WO2010/34692.

Dans les réacteurs-échangeurs de chaleur à plaques, les canaux de circulation de réactifs comme les canaux de circulation du fluide caloporteur peuvent être entièrement réalisés par rainurage (gravage) dans une seule plaque ou réalisés par rainurage (gravage) dans deux plaques dont l'assemblage mutuel forme un espace délimitant les canaux. Selon la technologie choisie pour le caloporteur, ces réacteurs peuvent être qualifiés d'isothermes ou d'anisothermes.

La combinaison de réacteurs d'une même catégorie ou de catégories différentes au sein d'une même unité de production peut bien entendu être envisagée, afin d'améliorer la conversion, la flexibilité ou la valorisation de la chaleur récupérée.

Par exemple, le brevet US 4298694 propose de combiner un réacteur adiabatique et un réacteur isotherme pour la production de méthane. Chacun des réacteurs traite une partie du flux d'entrée de gaz. Cela permet à la fois de récupérer la chaleur de réaction sous la forme de vapeur surchauffée qui est obtenue au moyen d'un échangeur connecté en sortie du réacteur adiabatique, et de produire un gaz à forte teneur en méthane grâce à la faible température obtenue en sortie du réacteur isotherme.

Les réacteurs-échangeurs à plaques permettent de lever les limitations inhérentes aux réacteurs adiabatiques et aux réacteurs à tube-calandre. Ce type de réacteurs-échangeurs est conçu en superposant de manière alternée des nappes de canaux de fluides réactifs sur des nappes de canaux de fluide refroidissement. Les dimensions réduites des canaux permettent d'augmenter drastiquement les transferts de masse et de chaleur au sein du réacteur. La compacité et l'efficacité en terme de conversion de réactifs et de sélectivité peut ainsi être améliorée et le dimensionnement industriel peut se faire en combinant la mise en place de plusieurs réacteurs en parallèle avec une augmentation du nombre de canaux dans chaque réacteur-échangeur, et ce tout en conservant les dimensions caractéristiques des canaux.

Cependant, la fabrication de ces réacteurs-échangeurs à plaques reste un problème ardu. Ainsi, on cherche constamment à améliorer le procédé de fabrication, plus particulièrement l'assemblage des plaques préalablement usinées, afin de le rendre robuste et économique.

On peut classer en trois catégories les techniques connues d'assemblage des plaques, comme suit:
- l'assemblage par brasage de plaques usinées ;
- l'assemblage par soudage par fusion avec ou sans apport de matière (soudage laser, par faisceau d'électrons (FE), soudage TIG,...) ;
- l'assemblage par soudage diffusion.

L'assemblage par soudage diffusion est particulièrement approprié car il permet d'assurer l'assemblage de l'ensemble des nervures, usuellement appelés isthmes, entre les canaux tout en préservant la continuité métallurgique. Ces deux conditions sont essentielles pour garantir la tenue mécanique d'un réacteur fonctionnant sous pression, typiquement de 5 à 100 bar, à température relativement élevée, typiquement de 200°C à 600°C, et sous cyclage thermique, avec le cas échéant présence de gaz ou liquides corrosifs.

La technique d'assemblage par soudage diffusion peut être mise en oeuvre par compression uniaxiale à chaud qui consiste à appliquer simultanément une température élevée et un chargement perpendiculaire aux plaques à assembler pendant un temps suffisant pour assurer le soudage des plaques entre elles.

Un tel procédé de fabrication de réacteurs-échangeurs est largement décrit dans la littérature. Ce procédé présente de nombreux inconvénients liés à la difficulté de garantie d'une bonne tenue mécanique et une étanchéité aux gaz, notamment à l'hydrogène, des assemblages obtenus. Cette difficulté impose par la suite de faire fonctionner les réacteurs-échangeurs réalisés, à l'intérieur d'une enceinte de confinement à pression atmosphérique ou, contenant un fluide sous pression. On pourra se reporter par exemple à la figure 1 de la demande de brevet WO2014/26204 ou à la figure 2 de la demande US 2012/0184633. Une limitation importante du procédé de soudage diffusion uni-axial tient au fait qu'il ne permet pas de souder des joints d'orientation quelconque par rapport à la direction d'application de la force de compression uni-axiale.

Un autre procédé alternatif pallie cet inconvénient. Dans cet autre procédé, la force est appliquée via un gaz sous pression dans une enceinte étanche. Ce procédé est communément appelé Compression Isostatique à Chaud (CIC).

Un autre avantage du procédé de soudage-diffusion par CIC comparativement au procédé de soudage diffusion uni axial est qu'il est plus largement répandu à l'échelle industrielle. En effet, la CIC est aussi utilisée pour le traitement par lots de pièces de fonderie ainsi que pour la compaction de poudres. La technique d'assemblage par soudage diffusion, par compression isostatique à chaud (CIC) est notamment décrite dans les demandes de brevet et brevets FR2879489B1, FR2936179B1, FR2949699A1, FR2950551A1, FR2955039B1, FR2989158A1, FR3005499A1 au nom du déposant. Un inconvénient important du procédé d'assemblage par CIC est lié à l'hétérogénéité de transmission de l'effort de soudage pendant la fabrication. Cette hétérogénéité peut résulter en une déformation hétérogène de l'assemblage à l'issue du procédé de fabrication, une déformation la plus importante se produisant dans les zones ayant subi les efforts les plus importants, et vice-versa.

Dans le cas particulier de la fabrication de réacteurs-échangeurs, cette différence de géométrie finale entre les canaux réactifs est potentiellement très gênante. En effet, elle peut conduire à une différence de débit de gaz entre les canaux réactifs, et donc à une utilisation et potentiellement une usure hétérogène des catalyseurs dans les différents canaux. Outre ces déséquilibres des débits de gaz, il peut se produire des déséquilibres des températures de catalyseurs conduisant à une baisse de rendement du réacteur et à un vieillissement prématuré du catalyseur, notamment dans le cas de réactions fortement exothermiques, typiquement comme la réaction de méthanation. Le déposant a proposé des solutions pour résoudre ce problème, qui sont décrites dans le demandes de brevet N° FR15 60687 déposée le 09 novembre 2015 et N° FR15 61906 déposée le 07 décembre 2015.

Quelle que soit la technologie d'assemblage des réacteurs-échangeurs, il existe de nombreuses solutions de mise en oeuvre du catalyseur offrant des performances différentes en termes de surface spécifique réactive accessible au fluide, de propriétés thermiques et de pertes de charges.

Le catalyseur peut ainsi être disposé sous la forme d'un lit fixe, comme décrit par exemple dans le brevet US 4,298,694 ou déposé directement sur une surface structurée qui peut constituer les parois du réacteur ou une structure rapportée, telle une mousse, un feutre ou un nid d'abeille : voir publication [1].

Ces solutions présentent généralement un bon contrôle thermique, puisque le catalyseur est en contact direct avec une structure conductrice, mais présentent l'inconvénient d'une faible densité de catalyseur puisqu'il est déposé en couches de quelques dizaines de microns seulement.

L'obtention de taux de conversion du CO₂ élevés nécessite alors des temps de passage des réactifs importants et donc des volumes de réacteur importants.

La demande WO 2014/096779 A1 décrit un réacteur-échangeur pour la production de syngas par vaporeformage du méthane dans des premiers canaux et une réaction exothermique dans des deuxièmes canaux adjacents.

La demande WO 2007/003959 A1 divulgue un réacteur comprenant un empilement de plaques dans lequel les canaux des réactifs et du fluide caloporteur peuvent être définis par des rainures dans les plaques.

Les demandes WO 2007/012890 A1 et WO 2006/079848 A1 concernent un réacteur à empilement de plaques similaire à celui de la demande WO 2007/003959 A1.I1 existe donc un besoin d'améliorer encore les réacteurs-échangeurs de chaleur, notamment afin d'améliorer les taux de conversion lors de réactions catalytiques fortement exothermiques ou endothermiques, sans que cela se fasse au détriment de la productivité, de la compacité et de la modularité des réacteurs, de la sélectivité des réactions mises en oeuvre, et à des coûts de fabrication et de facilité de mise en oeuvre acceptables.

Le but de l'invention est de répondre au moins partiellement à ce besoin, en proposant un réacteur-échangeur compact et modulaire.

### Exposé de l'invention

Pour ce faire, l'invention a pour objet un module (M) de réacteur-échangeur de chaleur à au moins deux circuits de fluide pour des réactions catalytiques exothermiques ou endothermiques, notamment pour la réaction de méthanation du CO₂, comprenant un empilement qui s'étend selon un axe longitudinal (X) et comprenant les éléments suivants assemblés entre eux par compression isostatique à chaud (CIC) :
- un ou plusieurs éléments formant chacun une nappe d'un des deux circuits de fluide, dit circuit de caloporteur, à l'intérieur duquel un fluide caloporteur est destiné à circuler, chaque élément du circuit de caloporteur comportant des canaux délimités au moins en partie par des rainures réalisées dans au moins une plaque;
- un ou plusieurs éléments formant chacun une nappe de l'autre des deux circuits de fluide, dit circuit de réactifs, à l'intérieur duquel au moins deux réactifs sont destinés à circuler, chaque élément du circuit de réactifs comportant des canaux délimités au moins en partie par des rainures réalisées dans au moins une plaque, au moins une partie des canaux de réactifs étant remplie au moins partiellement d'un catalyseur de conversion constitué d'une phase active métallique dispersée sur un support à base d'oxyde, la phase active métallique étant un métal de transition ou un mélange de métaux de transition. Le métal de transition est de préférence du cuivre, du zinc ou un élément du groupe VIII du tableau périodique des éléments tels que le fer, le cobalt, le nickel, le ruthénium.

Selon l'invention, les dimensions des canaux de circuit de réactifs, leur nombre par nappe ainsi que le nombre de nappes des canaux de circuits de réactifs sont déterminés de sorte à faire circuler un flux de réactifs pur, de préférence en conditions stoechiométriques compris entre 1500 et 3000 Nm³/h/m².

Par « flux de réactifs pur », on entend ici et dans le cadre de l'invention, un mélange ne contenant que des réactifs, par exemple H₂ + CO₂ dans le cas d'une réaction de méthanation, par opposition à un flux dilué qui peut contenir des espèces ne réagissant pas ou au contraire limitant la réaction, ce qui se produit lorsqu'on injecte des produits de réaction mélangés aux réactifs.

Les inventeurs sont partis d'un réacteur-échangeur assemblé par compression isostatique à chaud (CIC) dont ils ont optimisé le dimensionnement des canaux de réactifs et de caloporteur ainsi que leur nombre.

Puis, ils ont cherché à observer expérimentalement les conditions optimales pour une réaction de méthanation avec un catalyseur de nickel sur alumine déjà commercialisé.

Ils sont alors parvenus à la conclusion que pour une réaction de méthanation, pour un flux de réactifs pur H₂/CO₂ en conditions stoechiométriques, les caractérisations expérimentales du réacteur ont montré qu'un flux de réactifs compris entre 1500 et 3000 Nm³/h/m² présente un bon compromis entre productivité et taux de conversion.

L'invention telle que définie peut être mise en oeuvre également pour un flux de réactifs en conditions non stoechiométriques, c'est-à-dire en sur-stoechiométrie ou en sous-stoechiométrie.

Le support à base d'oxyde du catalyseur est de préférence choisi parmi les oxydes et solutions d'oxydes comprenant: l'oxyde d'aluminium (Al₂O₃), la silice (SiO₂), la zircone(ZrO2) ou la cérine (CeO₂) et la phase active du catalyseur solide de conversion est de préférence un métal de transition ou un mélange de métaux de transition du groupe VIII du tableau périodique des éléments. De préférence encore, cette phase active est à base de nickel (Ni), fer(Fe), ruthénium (Ru), rhodium (Rh), Cobalt (Co), argent (Ag), cuivre (Cu), selon les réactions mises en oeuvre.

Le catalyseur conforme à l'invention peut être sous forme de poudre ou de grains, ou constitué d'une structure support à base d'oxydes sur laquelle est dispersée la phase métallique du catalyseur de conversion.

Avantageusement, le nombre de canaux par nappe du circuit de réactifs est compris entre 5 et 100, de préférence compris entre 10 et 30.

Avantageusement encore, le nombre de nappes du circuit de réactifs est compris entre 1 et 100, de préférence compris entre 10 et 30.

Les dimensions préférées de chaque canal de circuit de réactifs sont les suivantes :
- une hauteur comprise entre 1 mm et 10 mm et de préférence, entre 2 et 8 mm ;
- une largeur comprise entre 5 et 20 mm, de préférence entre 5 et 15 mm.
- une longueur comprise entre 100 et 800 mm, de préférence entre 300 et 600 mm.

Avantageusement, la largeur de chaque nervure, appelée isthme, entre deux canaux de circuit de réactifs est comprise entre 2 et 10 mm, de préférence entre 3 et 8 mm.

Selon un mode de réalisation avantageux, au moins une partie des nappes du circuit de réactifs est intercalée individuellement au sein de l'empilement entre deux nappes du circuit de caloporteur.

Les canaux du circuit de caloporteur peuvent être réalisés de sorte à faire circuler le fluide caloporteur à co-courant, courants croisés ou à contre-courant des réactifs.

Selon un mode de réalisation particulièrement avantageux, chaque nappe de circuit de réactifs est intercalée entre deux nappes de circuit de caloporteur au moins dans une partie de l'empilement.

L'invention a également pour objet, selon un autre de ses aspects, un système de réacteurs-échangeur de chaleur comprenant une pluralité de modules décrits ci-dessus, reliés entre eux, en étant en série pour augmenter la conversion de réactif ou en parallèle les uns sur les autres et/ou les uns à côté des autres pour augmenter le débit total de réactif.

L'invention concerne également l'utilisation d'un module d'échangeur précédemment décrit ou du système ci-dessus pour mettre en oeuvre une réaction catalytique fortement exothermique ou fortement endothermique, de préférence une réaction de méthanation de CO et/ou de CO₂, une réaction du gaz à l'eau inverse (RWGS), une réaction de synthèse Fischer-Tropsch, une réaction de synthèse de méthanol, de DME, une réaction de reformage du méthane (CH₄).

L'invention a encore pour objet un procédé de fabrication d'un module (M) de réacteur-échangeur de chaleur à au moins deux circuits de fluide, comprenant un empilement qui s'étend selon un axe longitudinal (X), selon lequel on réalise un assemblage des éléments suivants entre eux par compression isostatique à chaud (CIC) :
- un ou plusieurs éléments formant chacun une nappe d'un des deux circuits de fluide, dit circuit de caloporteur, à l'intérieur duquel un fluide caloporteur est destiné à circuler, chaque élément du circuit de caloporteur comportant des canaux délimités au moins en partie par des rainures réalisées dans au moins une plaque;
- un ou plusieurs éléments formant chacun une nappe de l'autre des deux circuits de fluide, dit circuit de réactifs, à l'intérieur duquel au moins deux réactifs sont destinés à circuler, chaque élément du circuit de réactifs comportant des canaux délimités au moins en partie par des rainures réalisées dans au moins une plaque;
- au moins une partie des canaux de réactifs étant remplie au moins partiellement d'un catalyseur de conversion comprenant une phase active métallique dispersée sur un support à base d'oxyde, la phase active métallique étant un métal de transition ou un mélange de métaux de transition;

le procédé comprenant une étape préalable de dimensionnement des canaux de circuit de réactifs, leur nombre par nappe ainsi que le nombre de nappes des canaux de circuits de réactifs sont déterminés de sorte à faire circuler un flux de réactifs pur, de préférence en conditions stoechiométriques, compris entre 1500 et 3000 Nm³/h/m².

### Brève description des dessins

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique en perspective et en éclaté d'un élément d'un circuit de fluides réactifs selon une première alternative de l'invention, intégré dans un module de réacteur-échangeur de chaleur à deux circuits de fluide réalisé par empilement de plaques et assemblé par compression isostatique à chaud (CIC);
- la figure 1A est une vue en perspective d'un exemple de plaque constitutive d'un élément formant une nappe du circuit de fluides réactifs selon l'invention ;
- la figure 2 est une vue en perspective d'une variante de plaque constitutive d'un élément formant une nappe du circuit de fluides réactifs selon l'invention ;
- la figure 3 est une vue en perspective d'une autre variante de plaque constitutive d'un élément formant une nappe du circuit de fluides réactifs selon l'invention ;
- la figure 4 est une vue schématique en perspective d'un élément d'un circuit de fluides réactifs selon une deuxième alternative de l'invention;
- la figure 5 est une vue schématique en perspective d'un élément d'un circuit de fluides réactifs selon une troisième alternative de l'invention;
- la figure 6 est une vue en perspective d'un exemple de plaque constitutive d'un élément formant une nappe du circuit du fluide caloporteur selon l'invention;
- la figure 7 est une vue en perspective d'une variante de plaque constitutive d'un élément formant une nappe du circuit du fluide caloporteur selon l'invention ;
- la figure 8 est une vue en perspective d'un empilement de plaques comprenant des nappes du circuit de fluides réactifs et des nappes de circuit caloporteur, à l'intérieur d'un conteneur pour la mise en oeuvre d'un assemblage par soudage-diffusion par compression isostatique à chaud (CIC) ;
- la figure 9 est une vue en perspective d'un module de réacteur-échangeur conforme à l'invention obtenu après empilement alterné, assemblage par CIC de nappes du circuit de fluides réactifs et de nappes du circuit de caloporteur, selon la figure 8 et usinage;
- la figure 10 montre un collecteur de gaz dont la fonction est d'apporter les gaz réactifs ou à collecter les produits de réaction et destiné à être assemblé sur une bride 6 de la figure 9 de l'une des deux faces latérales du module ;
- la figure 11 illustre sous forme d'une courbe le profil des températures des réactifs que l'on obtient pour une réaction de méthanation, mise en oeuvre dans un réacteur-échangeur selon l'invention sous une pression à 2,5 bar, à un débit de CO₂ de l'ordre de 5NL/min et avec une température de caloporteur de l'ordre de 280°C;
- la figure 12 illustre sous forme d'une courbe le profil du taux de conversion du CO₂ que l'on obtient pour une réaction de méthanation, mise en oeuvre dans un réacteur-échangeur selon l'invention sous une pression à 2,5 bar, à un débit de CO₂ variant de 2 à 7,5 NL/min et avec une température de caloporteur variant de 270°C à 290°C.

### Description détaillée de l'invention

Dans l'ensemble de la demande, et en particulier dans la description détaillée qui va suivre, les termes « longitudinal » et « latéral » sont à considérer en relation avec la forme géométrique des plaques métalliques qui déterminent la forme géométrique de l'empilement du module réacteur-échangeur thermique selon l'invention.

Ainsi, au final les quatre côtés longitudinaux de l'empilement du module d'échangeur selon l'invention sont ceux qui s'étendent parallèlement à l'axe X longitudinal du module, c'est-à-dire selon la longueur L des plaques.

Les deux côtés latéraux de l'empilement sont ceux qui s'étendent selon l'axe Y latéral du module, orthogonalement à l'axe X, c'est-à-dire selon la largeur 1 des plaques.

Les termes « inférieur » et « supérieur » signifient respectivement le dessous et le dessus de l'empilement constituant le module de réacteur-échangeur selon l'invention.

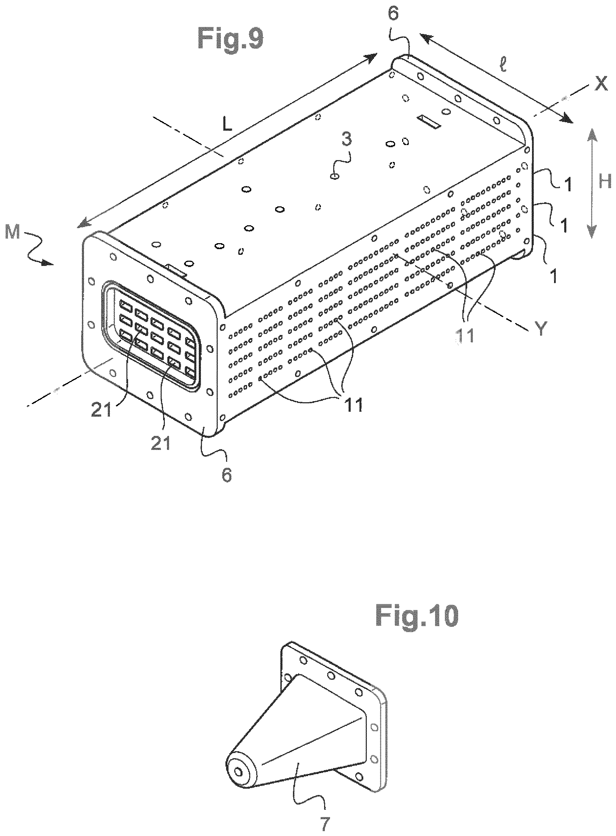

Un module de réacteur-échangeur M à deux circuits de fluides selon l'invention est montré en figure 9.

Ce module est constitué d'un bloc comprenant un empilement alterné de :
- plusieurs nappes 1 parallèles entre elles dans le sens de la hauteur H de l'empilement, comprenant chacune des canaux 11 parallèles entre eux, au sein desquels peut circuler un fluide caloporteur
- plusieurs nappes 2 parallèles entre elles dans le sens de la hauteur H de l'empilement, comprenant chacune des canaux 21 parallèles entre eux, remplis d'un catalyseur de conversion sous forme de grains et au sein desquels des fluides de réactifs peuvent circuler.

Comme montré sur cette figure 9, les canaux 11 débouchent sur deux des côtés longitudinaux de l'empilement, tandis que les canaux 21 débouchent sur les côtés latéraux de l'empilement.

Comme visible également sur la figure 9, le module M comprend des brides 6 sur chacun des côtés latéraux de l'empilement sur lequel débouchent les canaux 21 de circulation de réactifs. Ces deux brides 6 constituent des brides de fixation des collecteurs respectivement d'amenée des fluides réactifs et de récupération des produits de la réaction.

Selon l'invention, dans ce module M, les dimensions des canaux 21 de circuit de réactifs, leur nombre par nappe 1 ainsi que le nombre de nappes 1 des canaux de circuits de réactifs sont déterminés de sorte à faire circuler un flux de réactifs pur H₂/CO₂ en conditions stoechiométriques, compris entre 1500 et 3000 Nm³/h/m².

En effet, pour une réaction de méthanation, pour un flux de réactifs pur H₂/CO₂ de préférence en conditions stoechiométriques, les caractérisations expérimentales d'un module réacteur-échangeur ont montré qu'un flux de réactifs pur compris entre 1500 et 3000 Nm³/h/m² présente un bon compromis entre productivité et taux de conversion, que les réacteurs selon l'état de l'art ne peuvent atteindre.

Le module réacteur selon l'invention peut être mis en oeuvre avec un flux de réactifs pur en conditions non stoechiométriques.

Les inventeurs ont ainsi validé un module M en conditions non-stoechiométriques, c'est-à-dire un ratio H₂/CO₂ allant de 3,8 à 4,2.

De fait, les inventeurs sont partis du constat que le nombre de canaux par nappes et le nombre de nappes sont déterminés par le débit à traiter par module de réacteur.

On a indiqué dans le tableau 1 ci-dessous, les taux de conversion du CO₂ mesurés pour différentes pressions, températures du caloporteur et différents flux de réactifs dans un module M réacteur-échangeur selon l'invention.

**TABLEAU 1**

| Flux (Nm³/h/m²) | Pression (bar) | Température de caloporteur (°C) | | | | |
|---|---|---|---|---|---|---|
| | | 270 | 280 | 290 | 300 | |
| 940 | 1,25 | 58 | 82 | 88 | 91 | Taux de conversion du CO₂ |
| | 2,5 | 62 | 78 | 93 | | |
| 1875 | 1,25 | 40 | 48 | 79 | 84 | |
| | 2,5 | 41 | 73 | 87 | | |
| | 4 | 50 | 89 | | | |
| 2812 | 1,25 | 28 | 54 | 77 | | |
| | 2,5 | 30 | 76 | | | |

De ce tableau 1, il ressort notamment que l'on peut atteindre un taux de conversion de CH₄, de 91% pour un flux de 940 Nm³/h/m² à une pression de 1,25 bar et une température de caloporteur de 300°C.

Le tableau 2 ci-dessous caractérise la productivité du même module M selon l'invention, exprimée en Nm3/h de CH₄ par kg de catalyseur pour une température de caloporteur de 290°C.

**TABLEAU 2**

| Flux (Nm³/h/m²) | Pression (bar) | Productivité (Nm³ CH_{4 /}h/kg) |
|---|---|---|
| 940 | 1,25 | 1,3 |
| | 2,5 | 1,3 |
| 1875 | 1,25 | 3,3 |
| | 2,5 | 2,5 |
| 2812 | 1,25 | 3,3 |

On a indiqué dans le tableau 3, le nombre de canaux de circulation de réactifs et le nombre de nappes en fonction du débit de réactifs circulant dans un module M réacteur-échangeur selon l'invention, pour un flux fixé à 1875 Nm³/h/m².

Ce tableau montre que le débit de réactif, le nombre total de canaux, et le nombre de nappes sont liées mathématiquement et connaissant le débit, il est possible d'adapter et/ou d'ajuster (déterminer avec justesse) le nombre de canaux et le nombre de nappes afin de respecter les caractéristiques de compacité et de modularité du réacteur-échangeur selon l'invention.

**TABLEAU 3**

| Débit de réactif (Nm³/h) | Nombre total de canaux | Nombre de canaux par nappe | Nombre de nappes |
|---|---|---|---|
| 1,5 | 20 | 4 | 5 |
| 3 | 42 | 6 | 7 |
| 10 | 130 | 10 | 13 |
| 50 | 640 | 20 | 32 |
| 100 | 1350 | 30 | 45 |

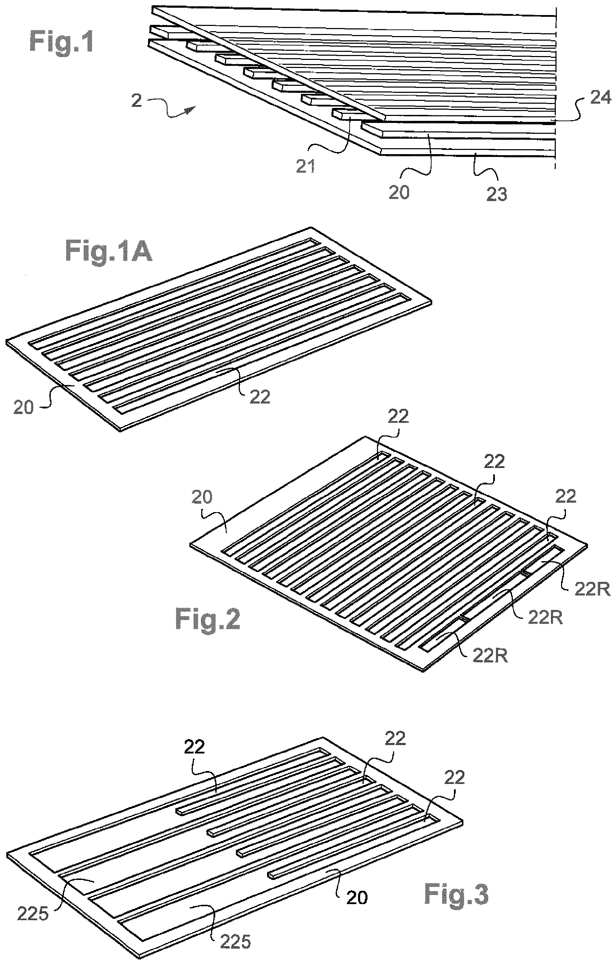

La figure 1 montre un exemple d'une première alternative de réalisation d'une nappe 2 intégrant les canaux 21 de circulation de fluides réactifs. Selon cette alternative, la nappe 2 est constituée par l'assemblage d'une plaque métallique 20 rainurée sur toute son épaisseur intercalée entre deux plaques pleines métalliques 23, 24.

La figure 1A montre le détail de la plaque métallique 20 d'épaisseur constante rainurée par les rainures 22 de section droite constante sur la longueur de la plaque 20.

Selon une variante de réalisation, il est possible d'intégrer au sein de cette plaque 20, une partie qui permet le retournement de circulation du fluide caloporteur d'une nappe 1 à l'autre. Cette variante est avantageuse lorsque les contraintes de refroidissement/réchauffement sont parfaitement appréhendées avant même la mise en oeuvre de la réaction mise en oeuvre dans le réacteur. Ainsi, selon cette variante, on réalise une découpe supplémentaire dans la plaque rainurée 2, lors de la fabrication des canaux de circulation de réactifs. Ainsi, comme visible en figure 2, des rainures supplémentaires 22R sont réalisées dans la plaque 20, sur un des côtés longitudinaux de l'empilement sur lequel les canaux de circulation de caloporteur débouchent.

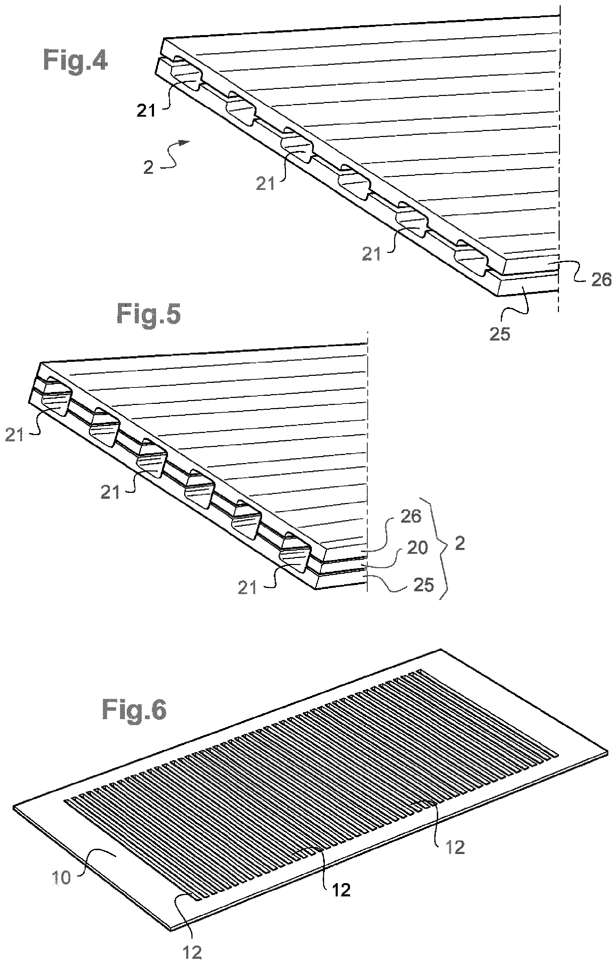

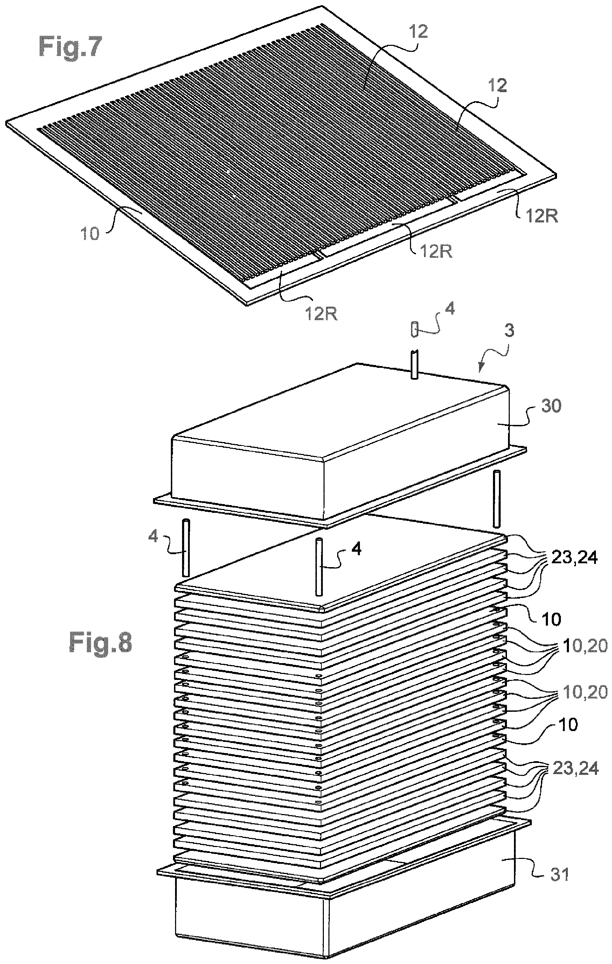

Dans l'empilement, ces rainures 22R forment avec des rainures correspondantes 12R réalisées dans les plaques 10 dédiées à la circulation du caloporteur, telles que montrées en figure 7, un collecteur de retournement du caloporteur pour faire circuler celui-ci d'une nappe 1 de caloporteur à l'autre depuis le collecteur d'entrée du caloporteur vers celui de sortie, non représentés. Dans l'exemple illustré aux figures 2 et 4, les rainures 12R, 22R dédiées au retournement sont au nombre de trois par plaque 10, 20 afin de réaliser trois compartiments distincts. On peut ainsi adjoindre au module sur l'autre côté longitudinal en regard, un collecteur complémentaire sous la forme d'une boite intégrant deux compartiments distincts. Ainsi, dans l'exemple considéré, le fluide caloporteur va parcourir quatre fois la largeur 1 du module réacteur-échangeur.

La figure 3 montre une variante de réalisation d'une plaque 20 qui consiste à modifier la topologie des canaux de circulation de réactifs 21 : sur cette figure 3, on voit qu'en entrée du module M réacteur, une plaque 20 comporte un nombre de huit rainures 22 parallèles qui constitueront avec les plaques pleines 23, 24, autant de canaux 21 parallèles, de circulation de réactifs. Dans une partie centrale de la plaque, les huit rainures 22S qui constitueront donc quatre canaux 21 en sortie se rejoignent pour n'en former qu'un nombre de quatre rainures. Cette variante est avantageuse car elle permet d'augmenter la quantité de catalyseur de conversion utilisée en sortie de réacteur et donc, d'augmenter la conversion tout en conservant un refroidissement efficace.

La figure 4 montre une deuxième alternative de réalisation d'une nappe 2 de circulation de fluide réactifs. Selon cette alternative, la nappe 2 est constituée par l'assemblage de deux plaques métalliques 25, 26 partiellement usinées, chaque usinage formant un demi-canal de circulation de réactif 21.

La figure 5 montre une troisième alternative de réalisation d'une nappe 2 de circulation de fluide réactifs. Selon cette alternative, la nappe 2 est constituée par l'assemblage d'une plaque métallique 20 rainurée sur toute son épaisseur intercalée entre deux plaques métalliques 25, 26 partiellement usinées.

La figure 6 montre une plaque métallique 10 d'épaisseur constante constituant au moins une partie d'une nappe 1 intégrant les canaux 11 de fluide caloporteur, constitués par les rainures 12 parallèles entre elles, de largeur constante sur la largeur de la plaque 10.

Un module M de réacteur-échangeur selon l'invention, tel que montré en figure 9 est obtenu par assemblage par soudage-diffusion par compression isostatique à chaud (CIC) des plaques 10, 20, 23, 24 empilées de manière alternée.

Un mode d'obtention des canaux privilégié est le rainurage par usinage de ces canaux dans les plaques. Cela peut se faire par enlèvement de matière mécanique, par gravure laser ou par usinage chimique.

Les rainures 12, 22 des canaux 11, 21 respectivement de fluides réactifs ou de fluide caloporteur peuvent être débouchantes sur l'extérieur comme illustré en figures 9 ou non.

Dans l'exemple illustré, les rainures 12, 22 et donc les canaux 11, 21 sont de section rectangulaire. On peut aussi prévoir des canaux 11, 21 de section ronde, carrée, ou selon tout autre profil. Le choix peut se faire selon la technique et l'outillage utilisé pour l'usinage.

Dans l'exemple illustré, la réalisation des canaux 11, 21 n'est pas faite sur toute la longueur et la largeur des plaques 10, 20 mais une réserve suffisante de matière est conservée. Cela permet de maintenir l'intégrité et la stabilité géométrique des plaques lors de l'usinage et lors de l'opération de soudage par CIC comme décrit ci-après.

On décrit maintenant un exemple avantageux de réalisation du module M représenté en figure 9.

Chaque élément 1, 2 est constitué par l'assemblage de deux plaques métalliques, comme illustré en figure 4.

Les rainures 12 formant une partie des canaux 11 de caloporteur sont réalisées par usinage sur une des faces principales d'une plaque 10, 20 et les rainures 22 formant les canaux 21 de circulation de caloporteur sont réalisées par usinage sur l'autre des faces principales de la même plaque métallique 10, 20; ce qui permet de réduire la distance séparant les canaux 11 de réactifs et les canaux 21 du caloporteur.

Les canaux du circuit 2 de fluides réactifs et du circuit 1 de fluide caloporteur sont réalisés à la fois (en même temps) par empilement successif de plaques dans un conteneur 3 en deux parties 30, 31, comme illustré en figure 8.

Afin d'aligner de façon optimale les motifs des différents canaux entre les plaques empilées, on peut prévoir avantageusement des piges 4 mises en place aux quatre coins des plaques, préalablement percées comme illustré en figure 8. Tout autre moyen permettant de garantir une précision satisfaisante d'empilement des plaques entre elles peut être utilisé.

L'empilement ainsi réalisé est logé dans le conteneur 3 qui permet au final d'assurer un environnement étanche et sous vide.

Les plaques rainurées 10, 20 et leur agencement relatif peuvent être réalisés de sorte que les nappes 2 de canaux 21 des réactifs alternent individuellement avec les nappes 1 de canaux 11 de caloporteur au moins au centre de l'empilement et que l'écoulement des fluides réactifs dans les canaux 21 soit à contre-courant, à co-courant, à courant-croisés ou encore globalement co-courant ou contre-courant et localement à courant-croisés avec l'écoulement du caloporteur dans les canaux 11.

Lorsque l'ensemble des plaques a été empilé, elles peuvent être assemblées par soudage-diffusion par compression isostatique à chaud (CIC).

La technique de compression isostatique à chaud (CIC), y compris ses étapes de réalisation, est bien connue de l'état de la technique. On pourra se reporter avantageusement à la publication [2].

Dans notre cas, l'empilement est soumis à au moins un cycle de compression isostatique à chaud (CIC).

De préférence, l'assemblage par CIC est réalisé :
- à une pression comprise entre 20 et 500 bar,
- à une température comprise entre 500 et 1200°C,
- et pendant une durée comprise entre 15 min et quelques heures.

On obtient ainsi un bloc préassemblé formant un module de réacteur-échangeur selon l'invention, que l'on peut aisément contrôler par d'autres diagnostics techniques comme les ultrasons ou la radiographie.

A la fin du cycle de CIC, les canaux sont usinés, par exemple par perçage, afin d'ouvrir les rainures (canaux) et l'empilement est soumis éventuellement, à un autre cycle de compression isostatique à chaud (CIC). Ce cycle de CIC est effectué pour parfaire le soudage et éliminer la porosité résiduelle.

A l'issue des cycles de CIC, le module réacteur-échangeur est usiné afin de permettre la mise en place des collecteurs de gaz et de caloporteur et de l'instrumentation, comprenant notamment des thermocouples et des capteurs de prélèvements par capillaire comme le montre la figure 9.

A ce stade, les canaux 21 de circuit de réactifs sont remplis au moyen de catalyseur en grains.

La taille des grains du catalyseur est choisie de façon à réduire les limites de diffusion des fluides réactifs dans les grains de catalyseur, dans la limite des pertes de charges admissibles. Il est connu que la dimension des grains de catalyseurs doit être suffisamment petite par rapport aux dimensions du canal, typiquement un rapport de 1/20 est généralement préconisé. Pour limiter les pertes de charges, un rapport de 1/10 seulement peut être utilisé en conservant de très bonnes performances.

Le catalyseur est choisi selon l'application visée. Avantageusement, pour une réaction de méthanation, le catalyseur est constitué de particules d'alumine gamma sur lesquelles sont dispersées des cristallites de nickel de taille nanométrique.

Enfin, sur chacun des deux côtés longitudinaux de l'empilement, est rapporté un collecteur/distributeur de fluide caloporteur.

Un exemple avantageux de distributeur/collecteur des gaz réactifs/produits obtenus est montré en figure 10. Un tel collecteur/distributeur 7 est vissé sur une bride 6 en bout de module. L'étanchéité est assurée par un joint métallique interposé entre la bride 6 et le collecteur 7. Un collecteur/distributeur identique est visé sur l'autre face latérale du module. Ainsi, l'un des collecteur/distributeur 7 amène les gaz réactifs en entrée tandis que l'autre collecte les gaz en sortie de réacteur.

Un module réacteur-échangeur réalisé comme décrit ci-dessus permet de réaliser avantageusement la synthèse de méthane à partir d'hydrogène et de dioxyde de carbone pour des débits de réactifs de 1 à 100 Nm³/h.

L'efficacité du refroidissement que l'on peut obtenir permet de limiter l'écart entre la température maximale du catalyseur et celle du caloporteur à environ 200°C lors du démarrage avec un catalyseur neuf et environ 100°C dans les phases de fonctionnement établi.

Cela limite la vitesse de dégradation du catalyseur par rapport aux réacteurs-échangeurs selon l'état de l'art et permet la récupération de la chaleur à un niveau de température valorisable.

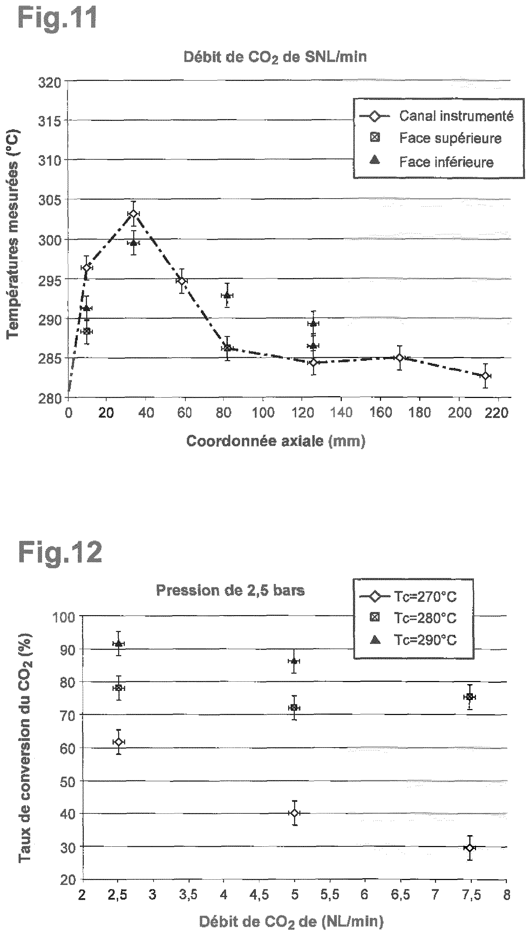

Pour valoriser la chaleur, on peut par exemple réaliser un couplage à la phase de régénération d'un système de capture de CO₂ par amines ou par couplage au générateur de vapeur d'un électrolyseur de vapeur d'eau à haute température (EVHT). Par exemple, pour une pression de 2,5 bar et une température de 280°C, l'élévation de température mesurée est de l'ordre de 25°C, comme cela ressort de la figure 11.

Un module réacteur-échangeur selon l'invention peut être opéré dans des gammes de flux variables. La figure 12 illustre le résultat d'un essai sur un module réacteur-échangeur comprenant un nombre de vingt canaux de réactifs pour lequel le débit de CO₂ a été imposé de 2 à 7,5 NL/min de CO₂ et l'hydrogène a été injecté dans des proportions stoechiométriques.

Une plus grande diminution du débit de fonctionnement peut être mise en oeuvre, et permet d'augmenter le taux de conversion du CO₂ jusqu'à se rapprocher de la limite thermodynamique. Le module réacteur-échangeur selon l'invention peut être opéré dans une gamme de 20 à 100% du débit nominal, ce dernier étant fixé par le nombre de canaux comme indiqué dans le tableau 2 ci-dessus.

L'intégration des canaux de caloporteur au coeur du module et l'efficacité du refroidissement/chauffage peut conduire à des temps de réponse à un changement de consigne de température très rapides, typiquement de l'ordre de la minute.

Bien entendu, la présente invention n'est pas limitée aux variantes et aux modes de réalisation décrits fournis à titre d'exemples illustratifs et non limitatifs.

Les canaux de réactifs peuvent également présenter une géométrie autre qu'un motif droit comme montré en figure 1 tout étant de forme allongée.

Dans l'exemple illustré, et pour une application particulière à la mise en oeuvre d'une réaction fortement exothermique telle qu'une réaction de méthanation, les géométries préférées des canaux réactifs sont celles permettant de garder une hauteur constante et avec une largeur qui augmente linéairement ou selon une autre loi. Par exemple, la hauteur des canaux peut être inférieure à 10 mm et plus particulièrement, comprise entre 3 et 8 mm. La largeur des canaux peut être inférieure à 50 mm et plus particulièrement varier de 3 à 8 mm en entrée du réacteur et de 5 à 40 mm en sortie.

Le nombre de canaux par nappe peut être adapté au débit de réactifs à traiter. Il est de préférence inférieur à 100 et de préférence compris entre 5 et 80.

Le nombre de nappes de circuit réactif peut aussi être adapté au débit de réactifs à traiter. Il est de préférence inférieur à 100 et de préférence compris entre 5 et 80.

Le nombre de nappes de fluide de caloporteur dépend du nombre de nappes du circuit de réactifs. Pour un refroidissement optimal, dans le cas d'une réaction fortement exothermique ou endothermique, il est préféré de mettre en place une nappe de circuit de caloporteur de part et d'autre de chaque nappe de réactifs comme dans l'exemple illustré en figure 8.

Dans l'exemple illustré, les canaux 21 de circulation de réactifs sont parallèles et ne communiquent pas entre eux. Il est tout à fait possible d'introduire des communications entre ces canaux à diverses positions le long du module réacteur-échangeur. Cela peut être fait directement lors de l'usinage des plaques métalliques 20, 25, 26.

Dans la réalisation d'un module réacteur-échangeur selon l'invention, la fabrication d'un collecteur et distributeur peut être faite soit par usinage direct dans la masse, soit par soudage de parties pré-usinées soit par assemblage de plaques. La tenue en pression est garantie par l'utilisation d'un matériau adapté, par exemple un acier austénitique, et par la mise en place éventuelle de nervures.

Enfin, si l'exemple illustré concerne des échangeurs à exactement deux circuits de fluides, il est tout à fait possible de fabriquer un échangeur à trois circuits de fluides ou plus.

Un réacteur-échangeur selon l'invention qui vient d'être décrit est particulièrement adapté à la mise en oeuvre de réactions fortement exothermiques ou endothermiques. Parmi ces réactions, on peut citer tout particulièrement les réactions de méthanation de CO et/ou de CO₂, les réactions de synthèse du méthanol et du diméthyléther (DME), de reformage humide ou à sec du méthane ou d'autres hydrocarbures, d'oxydation, ou encore de synthèse Fischer-Tropsch.

### REFERENCES CITEES

[1]: Meille Valérie, « Review on methods to deposit catalysts on structured surfaces », Applied Catalysis A: General 315 (2006) 1-17;
[2]: Ala Zouaghi, « Étude de la compaction isostatique à chaud de l'acier inox 316L: Modélisation numérique à l'échelle mésoscopique et caractérisation expérimentale », Ecole Nationale Supérieure des Mines de Paris, 2013

## Revendications

1. Module (M) de réacteur-échangeur de chaleur à au moins deux circuits de fluide, comprenant un empilement qui s'étend selon un axe longitudinal (X) **caractérisé en ce que** l'empilement comprend les éléments suivants assemblés entre eux par compression isostatique à chaud (CIC) :
- au moins un élément (1) formant chacun une nappe d'un des deux circuits de fluide, dit circuit de caloporteur, à l'intérieur duquel un fluide caloporteur est destiné à circuler, ledit élément (1) du circuit de caloporteur comprenant des canaux (11) délimités au moins en partie par des rainures (12) réalisées dans au moins une plaque (10);
- au moins un élément (2) formant chacun une nappe de l'autre des deux circuits de fluide, dit circuit de réactifs, à l'intérieur duquel au moins deux réactifs sont destinés à circuler, ledit élément (2) du circuit de réactifs comprenant des canaux (21) délimités au moins en partie par des rainures (22) réalisées dans au moins une plaque (20), au moins une partie des canaux de réactifs étant remplie au moins partiellement d'un catalyseur de conversion comprenant une phase active métallique dispersée sur un support à base d'oxyde, la phase active métallique étant un métal de transition ou un mélange de métaux de transition,
module dans lequel les dimensions des canaux (21) de circuit de réactifs, leur nombre par nappe ainsi que le nombre de nappes des canaux de circuits de réactifs sont adaptés pour faire circuler un flux de réactifs pur en conditions stoechiométriques, compris entre 1500 et 3000 Nm³/h/m².

2. Module de réacteur-échangeur selon la revendication 1, dans lequel le support à base d'oxyde du catalyseur est choisi parmi les oxydes ou solutions d'oxydes comprenant de l'oxyde d'aluminium (Al₂O₃), la silice (SiO₂), la zircone(ZrO2), la cérine (CeO₂).

3. Module de réacteur-échangeur selon la revendication 2, dans lequel le catalyseur solide de conversion est à base de nickel (Ni) supporté par l'oxyde d'aluminium (Al₂O₃).

4. Module de réacteur-échangeur selon l'une quelconque des revendications précédentes, dans lequel le catalyseur est sous forme de poudre ou de grains constitués du support et de la phase métallique, ou constitué d'une structure sur laquelle sont déposés le support et la phase métallique du catalyseur de conversion.

5. Module de réacteur-échangeur selon l'une quelconque des revendications précédentes, dans lequel le nombre de canaux (21) par nappe (2) du circuit de réactifs est compris entre 5 et 100, de préférence compris entre 10 et 30.

6. Module de réacteur-échangeur selon l'une quelconque des revendications précédentes, dans lequel le nombre de nappes (2) du circuit de réactifs est compris entre 1 et 100, de préférence compris entre 10 et 30.

7. Module de réacteur-échangeur selon l'une quelconque des revendications précédentes, dans lequel la hauteur de chaque canal (21) de circuit de réactifs est comprise entre 1 mm et 10 mm et de préférence, comprise entre 2 et 8 mm.

8. Module de réacteur-échangeur selon l'une quelconque des revendications précédentes, dans lequel la largeur de chaque canal (21) de circuit de réactifs est comprise entre 5 et 20 mm, de préférence entre 5 et 15 mm.

9. Module de réacteur-échangeur selon l'une quelconque des revendications précédentes, dans lequel la longueur de chaque canal (21) de circuit de réactifs est comprise entre 100 et 800 mm, de préférence entre 300 et 600 mm.

10. Module de réacteur-échangeur selon l'une quelconque des revendications précédentes, dans lequel la largeur de chaque nervure, appelée isthme, entre deux canaux (21) de circuit de réactifs est comprise entre 2 et 10 mm, de préférence entre 3 et 8 mm.

11. Module de réacteur-échangeur selon l'une quelconque des revendications précédentes, dans lequel au moins une partie des nappes du circuit de réactifs est intercalée individuellement au sein de l'empilement entre deux nappes du circuit de caloporteur.

12. Module de réacteur-échangeur selon l'une quelconque des revendications précédentes, dans lequel les canaux du circuit de caloporteur est réalisés de sorte à faire circuler le fluide caloporteur à co-courant, courant croisé ou à contre-courant des réactifs.

13. Module de réacteur-échangeur selon l'une quelconque des revendications précédentes, dans lequel dans lequel chaque nappe de circuit de réactifs est intercalée entre deux nappes de circuit de caloporteur au moins dans une partie de l'empilement.

14. Procédé de fabrication d'un module (M) de réacteur-échangeur de chaleur à au moins deux circuits de fluide, comprenant un empilement qui s'étend selon un axe longitudinal (X), selon lequel on réalise un assemblage des éléments suivants entre eux par compression isostatique à chaud (CIC) :
- un ou plusieurs éléments (1) formant chacun une nappe d'un des deux circuits de fluide, dit circuit de caloporteur, à l'intérieur duquel un fluide caloporteur est destiné à circuler, chaque élément du circuit de caloporteur comportant des canaux (11) délimités au moins en partie par des rainures (12) réalisées dans au moins une plaque (10);
- un ou plusieurs éléments (2) formant chacun une nappe de l'autre des deux circuits de fluide, dit circuit de réactifs, à l'intérieur duquel au moins deux réactifs sont destinés à circuler, chaque élément du circuit de réactifs comportant des canaux (21) délimités au moins en partie par des rainures (22) réalisées dans au moins une plaque (20);
- au moins une partie des canaux de réactifs étant remplie au moins partiellement d'un catalyseur de conversion comprenant une phase active métallique dispersée sur un support à base d'oxyde, la phase active métallique étant un métal de transition ou un mélange de métaux de transition;
le procédé comprenant une étape préalable de dimensionnement des canaux (21) de circuit de réactifs, leur nombre par nappe ainsi que le nombre de nappes des canaux de circuits de réactifs sont déterminés de sorte à faire circuler un flux de réactifs pur, de préférence en conditions stoechiométriques, compris entre 1500 et 3000 Nm³/h/m².

## Patentansprüche

1. Reaktor-Wärmetauschermodul (M) mit mindestens zwei Fluidkreisläufen, das mindestens eine Stapelung umfasst, die sich in einer Längsachse (X) erstreckt, **dadurch gekennzeichnet, dass** die Stapelung die folgenden Elemente umfasst, die durch heißisostatisches Pressen (HIP) zusammengefügt sind:
- wobei mindestens ein Element (1) jeweils eine Lage eines der beiden Fluidkreisläufe bildet, Wärmeträgerkreislauf genannt, in dessen Inneren ein Wärmeträgerfluid zum Strömen vorgesehen ist, wobei das Element (1) des Wärmeträgerkreislaufs Kanäle (11) umfasst, die mindestens teilweise durch Rinnen (12) begrenzt sind, die in mindestens einer Platte (10) ausgebildet sind;
- wobei mindestens ein Element (2) jeweils eine Lage des anderen der beiden Fluidkreisläufe bildet, Reaktionsmittelkreislauf genannt, in dessen Inneren mindestens zwei Reaktionsmittel zum Strömen vorgesehen sind, wobei das Element (2) des Reaktionsmittelkreislaufs Kanäle (21) umfasst, die mindestens teilweise durch Rinnen (22) begrenzt sind, die in mindestens einer Platte (20) ausgebildet sind, wobei mindestens ein Teil der Reaktionsmittelkanäle mindestens teilweise mit einem Umwandlungskatalysator gefüllt ist, der eine metallische aktive Phase umfasst, die über einen Träger auf Oxidbasis verstreut ist, wobei die metallische aktive Phase ein Übergangsmetall oder eine Mischung von Übergangsmetallen ist,
Modul, in dem die Abmessungen der Kanäle (21) des Reaktionsmittelkreislaufs, ihre Anzahl pro Lage sowie die Anzahl der Lagen der Kanäle der Reaktionsmittelkreisläufe dazu geeignet sind, einen reinen Reaktionsmittelfluss zu stöchiometrischen Bedingungen strömen zu lassen, der zwischen 1500 und 3000 Nm³/h/m² beträgt.

2. Reaktor-Wärmetauschermodul nach Anspruch 1, wobei der Träger auf Oxidbasis des Katalysators aus den Oxiden oder Oxidlösungen ausgewählt ist, die Aluminiumoxid (Al₂O₃), Siliciumdioxid (SiO₂), Zirkoniumdioxid (ZrO₂), Cerdioxid (CeO₂) umfassen.

3. Reaktor-Wärmetauschermodul nach Anspruch 2, wobei der feste Umwandlungskatalysator auf Nickel (Ni) basiert, getragen von Aluminiumoxid (Al₂O₃).

4. Reaktor-Wärmetauschermodul nach einem der vorhergehenden Ansprüche, wobei der Katalysator in Form von Pulver oder Körnern vorliegt, die aus dem Träger und der metallischen Phase bestehen oder aus einer Struktur bestehen, auf der der Träger und die metallische Phase des Umwandlungskatalysators abgeschieden sind.

5. Reaktor-Wärmetauschermodul nach einem der vorhergehenden Ansprüche, wobei die Anzahl der Kanäle (21) pro Lage (2) des Reaktionsmittelkreislaufs zwischen 5 und 100, vorzugsweise zwischen 10 und 30 beträgt.

6. Reaktor-Wärmetauschermodul nach einem der vorhergehenden Ansprüche, wobei die Anzahl der Lagen (2) des Reaktionsmittelkreislaufs zwischen 1 und 100, vorzugsweise zwischen 10 und 30 beträgt.

7. Reaktor-Wärmetauschermodul nach einem der vorhergehenden Ansprüche, wobei die Höhe jedes Kanals (21) des Reaktionsmittelkreislaufs zwischen 1 mm und 10 mm und vorzugsweise zwischen 2 und 8 mm beträgt.

8. Reaktor-Wärmetauschermodul nach einem der vorhergehenden Ansprüche, wobei die Breite jedes Kanals (21) des Reaktionsmittelkreislaufs zwischen 5 und 20 mm, vorzugsweise zwischen 5 und 15 mm beträgt.

9. Reaktor-Wärmetauschermodul nach einem der vorhergehenden Ansprüche, wobei die Länge jedes Kanals (21) des Reaktionsmittelkreislaufs zwischen 100 und 800 mm, vorzugsweise zwischen 300 und 600 mm beträgt.

10. Reaktor-Wärmetauschermodul nach einem der vorhergehenden Ansprüche, wobei die Breite jeder Rippe, Steg genannt, zwischen zwei Kanälen (21) des Reaktionsmittelkreislaufs zwischen 2 und 10 mm, vorzugsweise zwischen 3 und 8 mm beträgt.

11. Reaktor-Wärmetauschermodul nach einem der vorhergehenden Ansprüche, wobei mindestens ein Teil der Lagen des Reaktionsmittelkreislaufs einzeln in die Stapelung zwischen zwei Lagen des Wärmeträgerkreislaufs eingefügt ist.

12. Reaktor-Wärmetauschermodul nach einem der vorhergehenden Ansprüche, wobei die Kanäle des Wärmeträgerkreislaufs so ausgebildet sind, dass sie das Wärmeträgerfluid im Gleichstrom, stromkreuzend oder im Gegenstrom der Reaktionsmittel strömen lassen.

13. Reaktor-Wärmetauschermodul nach einem der vorhergehenden Ansprüche, wobei jede Lage des Reaktionsmittelkreislaufs mindestens in einem Teil der Stapelung zwischen zwei Lagen des Wärmeträgerkreislaufs eingefügt ist.

14. Verfahren zur Herstellung eines Reaktor-Wärmetauschermoduls (M) mit mindestens zwei Fluidkreisläufen, das mindestens eine Stapelung umfasst, die sich in einer Längsachse (X) erstreckt, mit dem ein Zusammenfügen der folgenden Elemente durch heißisostatisches Pressen (HIP) durchgeführt wird:
- wobei ein oder mehrere Elemente (1) jeweils eine Lage eines der beiden Fluidkreisläufe bildet, Wärmeträgerkreislauf genannt, in dessen Inneren ein Wärmeträgerfluid zum Strömen vorgesehen ist, wobei jedes Element des Wärmeträgerkreislaufs Kanäle (11) umfasst, die mindestens teilweise durch Rinnen (12) begrenzt sind, die in mindestens einer Platte (10) ausgebildet sind;
- wobei ein oder mehrere Elemente (2) jeweils eine Lage des anderen der beiden Fluidkreisläufe bildet, Reaktionsmittelkreislauf genannt, in dessen Inneren mindestens zwei Reaktionsmittel zum Strömen vorgesehen sind, wobei jedes Element des Reaktionsmittelkreislaufs Kanäle (21) umfasst, die mindestens teilweise durch Rinnen (22) begrenzt sind, die in mindestens einer Platte (20) ausgebildet sind;
- wobei mindestens ein Teil der Reaktionsmittelkanäle mindestens teilweise mit einem Umwandlungskatalysator gefüllt ist, der eine metallische aktive Phase umfasst, die über einen Träger auf Oxidbasis verstreut ist, wobei die metallische aktive Phase ein Übergangsmetall oder eine Mischung von Übergangsmetallen ist;
wobei das Verfahren einen vorherigen Schritt des Dimensionierens der Kanäle (21) des Reaktionsmittelkreislaufs umfasst, ihre Anzahl pro Lage sowie die Anzahl der Lagen der Kanäle des Reaktionsmittelkreislaufs so bestimmt werden, dass sie einen reinen Reaktionsmittelfluss, vorzugsweise zu stöchiometrischen Bedingungen, strömen lassen, der zwischen 1500 und 3000 Nm³/h/m² beträgt

## Claims

1. Reactor-heat exchanger module (M) with at least two fluid circuits, comprising a stack which extends along a longitudinal axis (X), **characterized in that** the stack comprises the following elements assembled together by hot isostatic pressing (HIP):
- at least one element (1) each forming a layer of one of the two fluid circuits, called heat-transfer circuit, inside which a heat-transfer fluid is intended to circulate, said element (1) of the heat-transfer circuit comprising channels (11) at least partially delimited by grooves (12) produced in at least one plate (10) ;
- at least one element (2) each forming a layer of the other of the two fluid circuits, called reagent circuit, inside which at least two reagents are intended to circulate, said element (2) of the reagent circuit comprising channels (21) at least partially delimited by grooves (22) produced in at least one plate (20), at least some of the reagent channels being at least partially filled with a conversion catalyst comprising a metal active phase dispersed over an oxide-based support, the metal active phase being a transition metal or a mixture of transition metals,
in which module the dimensions of the reagent circuit channels (21), the number of them per layer and the number of layers of the reagent circuit channels are adapted to make a pure stream of reagents flow under stoichiometric conditions, between 1500 and 3000 Nm³/h/m².

2. Reactor-exchanger module according to Claim 1, wherein the oxide-based support of the catalyst is selected from the oxides or solutions of oxides comprising aluminium oxide (Al₂O₃), silica (SiO₂), zirconia (ZrO₂) and ceria (CeO₂).

3. Reactor-exchanger module according to Claim 2, wherein the solid conversion catalyst is based on nickel (Ni) supported by aluminium oxide (Al₂O₃).

4. Reactor-exchanger module according to any one of the preceding claims, wherein the catalyst is in the form of powder or constituent grains of the support and of the metal phase, or made up of a structure on which the support and the metal phase of the conversion catalyst are deposited.

5. Reactor-exchanger module according to any one of the preceding claims, wherein the number of channels (21) per layer (2) of the reagent circuit is between 5 and 100, preferably between 10 and 30.

6. Reactor-exchanger module according to any one of the preceding claims, wherein the number of layers (2) of the reagent circuit is between 1 and 100, preferably between 10 and 30.

7. Reactor-exchanger module according to any one of the preceding claims, wherein the height of each reagent circuit channel (21) is between 1 mm and 10 mm and preferably between 2 and 8 mm.

8. Reactor-exchanger module according to any one of the preceding claims, wherein the width of each reagent circuit channel (21) is between 5 and 20 mm, preferably between 5 and 15 mm.

9. Reactor-exchanger module according to any one of the preceding claims, wherein the length of each reagent circuit channel (21) is between 100 and 800 mm, preferably between 300 and 600 mm.

10. Reactor-exchanger module according to any one of the preceding claims, wherein the width of each rib, referred to as isthmus, between two reagent circuit channels (21) is between 2 and 10 mm, preferably between 3 and 8 mm.

11. Reactor-exchanger module according to any one of the preceding claims, wherein at least some of the layers of the reagent circuit are interposed individually within the stack between two layers of the heat-transfer circuit.

12. Reactor-exchanger module according to any one of the preceding claims, wherein the channels of the heat-transfer circuit are produced so as to make the heat-transfer fluid flow co-currently with, cross-currently with or counter-currently to the reagents.

13. Reactor-exchanger module according to any one of the preceding claims, wherein each reagent circuit layer is interposed between two heat-transfer circuit layers at least in one part of the stack.

14. Method for manufacturing a reactor-heat exchanger module (M) with at least two fluid circuits, comprising a stack which extends along a longitudinal axis (X), in which method the following elements are assembled together by hot isostatic pressing (HIP):
- one or more elements (1) each forming a layer of one of the two fluid circuits, called heat-transfer circuit, inside which a heat-transfer fluid is intended to circulate, each element of the heat-transfer circuit having channels (11) at least partially delimited by grooves (12) produced in at least one plate (10);
- one or more elements (2) each forming a layer of the other of the two fluid circuits, called reagent circuit, inside which at least two reagents are intended to circulate, each element of the reagent circuit having channels (21) at least partially delimited by grooves (22) produced in at least one plate (20);
- at least some of the reagent channels being at least partially filled with a conversion catalyst comprising a metal active phase dispersed over an oxide-based support, the metal active phase being a transition metal or a mixture of transition metals;
the method comprising a prior step of dimensioning the reagent circuit channels (21), the number of them per layer and the number of layers of the reagent circuit channels are determined so as to make a pure stream of reagents flow, preferably under stoichiometric conditions, between 1500 and 3000 Nm³/h/m².
